Europäisches Patentamt

European Patent Office

Office européen des brevets

(11) Publication number: **0 128 124**
**B1**

## EUROPEAN PATENT SPECIFICATION

(45) Date of publication of patent specification: **19.10.88**

(51) Int. Cl.⁴: **F 16 K 31/06**, F 02 M 3/06

(21) Application number: **84830109.9**

(22) Date of filing: **10.04.84**

(54) **Electromagnetically-controlled valve, suitable for controlling an additional air flow in a feed equipment for an internal combustion engine.**

(43) Date of publication of application:
**12.12.84 Bulletin 84/50**

(45) Publication of the grant of the patent:
**19.10.88 Bulletin 88/42**

(84) Designated Contracting States:
**AT BE CH DE FR GB LI LU NL SE**

(56) References cited:
**DE-A-2 361 966**
**GB-A-2 029 552**
**GB-A-2 066 930**

(73) Proprietor: **WEBER S.r.l.**
**Corso Marconi, 20**
**I-10125 Torino (IT)**

(72) Inventor: **Busacchi, Pietro, Dr. Ing.**
**Via Murri, 195**
**I-40137 Bologna (IT)**

(74) Representative: **Rinaldi, Carlo**
**c.o. Studio Brevetti Nazionali ed Esteri dell'Ing.**
**Carlo Rinaldi & C. s.d.f. Piazza di Porta**
**Castiglione, 16**
**I-40136 Bologna (IT)**

Courier Press, Leamington Spa, England.

## Description

The invention refers to an electromagnetically controlled valve to control an additional air flow for intervening opportunely on the amount of the mixture delivered by a feed equipment of an internal combustion engine; in particular this invention is referred to a valve of the above mentioned type which controls the flow of said additional air which passes through a connecting pipe between two openings of a main feeding barrel. These openings being placed up-and downstream of a throttle valve, respectively. Therefore the valve according with the present invention varies the additional air amount through said barrel as a function of the requirements by the engine's functioning state.

For a long time are known devices which control an additional air flow passing through a conduit placed between two openings of a main feeding barrel disposed, respectively, up- and downstream of a throttle. An air flow calibration element is placed in said conduit such as a fix section bushing or a bushing having a section adjustable by means of the conical point of an adjusting screw.

In such known devices it is impossible to vary the section of the air flow calibration bushing during the functioning of the engine to adjust said additional air flow to the functioning engine's requirements.

More recently devices have been accomplished whose main features are disclosed in the preamble of the main claim.

The device disclosed in GB—A—2 066 930 is part of these latter. It includes an electromagnetically controlled valve able to control an additional air flow which crosses a by-pass conduit for a main feeding barrel of an internal combustion engine, and fitted with an inlet to connect said conduit with a region of said main barrel upstream of a throttle and with an outlet to connect said conduit with a region of said barrel downstream of said throttle; said valve including an obturator to vary the additional air amount, an electric winding to establish a magnetic field able to move said obturator, compensating holes to balance the pressions acting on two opposite surfaces of said obturator.

DE—A—2 361 966 discloses an adjusting valve with a casing. A guiding conduit is connected with the casing and houses a positioning device for a valve having a rod and a return spring.

A throttling body is arranged in the casing near the valve seat and is fitted with pression compensating holes toward said guiding conduit; the throttling body being shaped like a piston guided by said guiding conduit and connected with said rod and with said return spring; the skirt of said piston having a conical edge turned toward the seal surface of the valve seat.

The obturator of the cited documents is connected via a rod with a movable element of a positioning device; said movable element being constitued by a keeper of a solenoid valve. In this manner the movable keeper, and the obturator are part of an inertial mass which must be subjected to forces having an opportune intensity to be displaced toward the infinite positions allowing the air flow adjustment. These force must be intense enough in order that the inertial mass responses in a sufficiently short time to their stresses and in any case they must be obtained by establishing a sufficiently high magnetic field. This entails an high use of electric energy for establishing said magnetic field as this also entails problems for dissipating the thermic energy due to Joule's effect.

This invention is intended to remedy these drawbacks. The invention as it is characterized in the claims, solves the technical problem to accomplish an electromagnetically controlled valve including an obturator suitable to vary the effective passage section of a by-pass conduit for a main barrel up-and downstream of a throttle valve, respectively. Said obturator consists of a movable keeper surrounded by a nonmagnetic bushing and subjected to the forces of a magnetic field suitable to be varied as a function of the engine's functioning conditions and of the elastic forces of a spring.

The advantages obtained thanks to this invention are essentially: the capacity to control the additional air flow while the engine is working; the fact that the obturator is an integral part of the magnetic circuit.

Such a structure lends itself to carry out numberless balance positions of the obturator in respect to the additional air passage fix openings to obtain passage sections having the desired area, intervening on the pick up current value of the magnetic winding; since the inertial mass of said obtuator is constitued only by said movable keeper surrounded by particularly light material, the times for reaching said positions are minimized or the windings are subjected to electric inputs not so intense to dangerously warm up for Joule's effect.

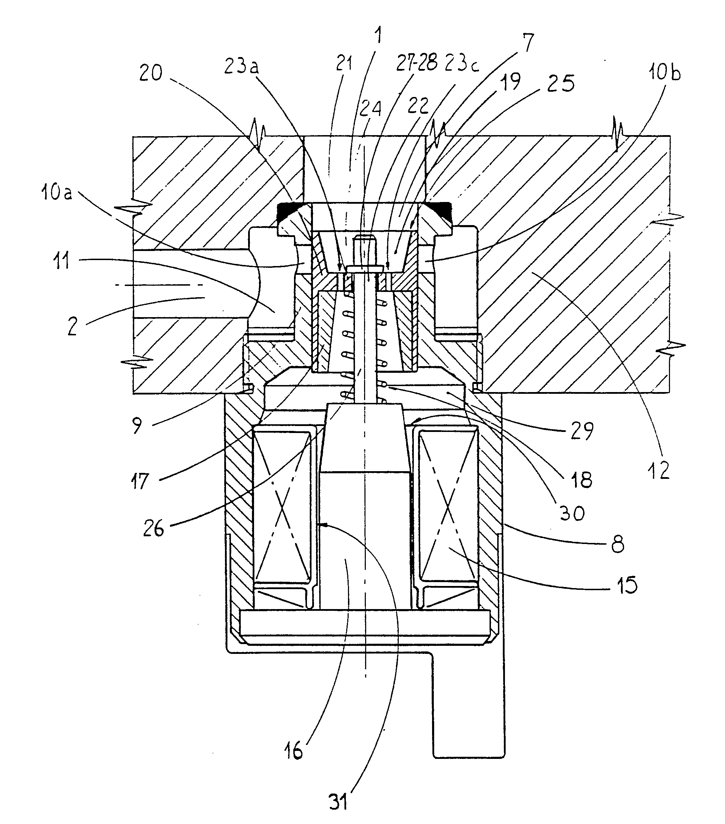

Now the invention is described more particularly, with reference to its realization, give as unrestricted example, shown in the enclosed drawing (fig. 1) which represents a valve according to this invention, shown in section by an axial symmetry plane.

The valve shown in fig. 1 is located in a pipe, not completely shown, which joins a first and a second opening, made in a main feeding barrel of an internal combustion engine, respectively, up- and downstream of a throttle valve; the above mentioned devices are not represented, as well known in the motor technic field.

The valve presents a body, globally indicated with 8, provided with an inlet 7 for the above mentioned pipe and connected to the first opening through a by-pass channel 1. The above mentioned inlet 7 is situated at the top of a tubular element 9, an integral part of the valve body 8, and in the element 9 there are two orifices 10a and 10b diametrically opposed and suitable to connect the internal part of said tubular element with a chamber 11 defined by the external surface of said element 9 and by the internal surface of a sleeve 12 which joins the pipe which is not represented in valve body 8 and which is joined to the second orifice, not represented, through a by-pass channel 2. In this way it has been made an air connection between the orifice on the upstream and the one on the downstream of the throttle, in said connection the above mentioned valve body 8 being inserted to control the air flow varying the passage section of said orifices 10a and 10b.

For this last purpose, the above mentioned valve body 8 includes, in addition to the sleeve 12 and to well known means, neither described nor represented, for its stable positioning with respect to the main barrel, a magnetic winding 15 which receives current from a not represented electrical control unit, a magnetic core 16 of low magnetic hysteresis material, and a movable keeper 17 made of low magnetic hysteresis material, which is moved by the magnetic field generated by the above mentioned energized winding 15, against the action of a return spring 18, which is placed between said core 16 and said keeper 17. The latter is part of a movable obturator 19 including a bushing 20 of nonmagnetic material which is able to move inside said element 9; said bushing 20 has: a housing for the keeper 17 which is integral with the internal part of obturator 19; an upper part 21 with a central orifice 22 and four excentric orifices, of which orifices 23a and 23c are shown in fig. 1, which connect said inlet 7 with a cavity 29 inside valve body 8; on the upper part 21 of said bushing 20 there is a frustro-conical shaped cavity 24, suitable to form a sharp edge on its top.

Central orifice 22 is crossed by a stem 26 integral with core 16, said stem 26 presents a groove 27 to lodge a ring 28 that carries out the upper end stroke for the obturator 19, as the lower stroke end is made up of a shoulder 30 of a casing 31 for said winding 15.

This special structures allows to obtain the following:

. a) a balance between pressures in inlet 7 and in cavity 29, so that the obturator 19 is not subjected to axial thrusts due to pressure forces acting on the two surfaces with equivalent areas, faced toward the inlet 7 and the cavity 29, respectively;

b) the control of magnetic pasting of the keeper 17, thanks to the presence of the nonmagnetic material with a defined thickness forming the bushing 20;

c) the positioning of the edge 25 with respect to the openings 10a and 10b by controlling the intensity of current that energizes winding 15; such positioning varies the sections of the air flow passage from the inlet 7 to the chamber 11 and in this way it adjusts the flow according to the working requirements of the engine being perceived and worked out by the above mentioned electrical control unit;

d) lamination of the air flow due to the sharp edge 25 at the end of part 21 finally makes it possible to adjust the additional air flow to the uncovered opening and with balance of the differences in pressure between upstream and downstream of the obturator.

**Claims**

1. Electromagnetically controlled valve being located in a pipe suitable for controlling an additional air flow in feed equipment for internal combustion engines comprising at least: an inlet (7) connected with a first channel (1), said first channel (1) connecting a first zone of an intake barrel placed upstream of a throttle valve and said inlet (7); outlet orifices (10a, 10b) toward a second channel (2), said second channel (2) connecting said outlet orifices (10a, 10b) and a second zone of said pipe placed downstream of said throttle; a valve body (8) containing said inlet (7); a tubular element (9) integral with said valve body (8), said valve body containing a magnetic winding (15) electrically connected with a control unit and a magnetic core (16); an obturator (19) movable between a first and a second position defined, respectively, by a first and a second stopping means to close or open, also partially, said orifices (10a, 10b); said obturator (19) being placed inside said tubular element (9); a cavity (29) within the valve body (8) and connected with said inlet (7) via orifices (23a, 23c); characterized by the fact that said obturator (19) has a frusto-conical shaped cavity (24) with a sharp edge (25), by the fact that said obturator (19) includes a movable keeper (17) surrounded by a bushing (20) of nonmagnetic material and by the fact that said orifices (10a, 10b) are formed in said tubular element (9).

2. Valve according to claim 1 characterized by the fact that said magnetic core (16) supports a stem (26) on which said obturator (19) slides and in which a groove (27) is made to house a stopping ring (28) and by the fact that said magnetic winding (15) is housed in a container (31) having a shoulder (30); said stopping ring (28) and said shoulder (30) constituting, respectively, said first and said second stopping elements.

**Patentansprüche**

1. Magnetantriebsventil, das in einem Kanal gesetzt ist und das geeignet ist, eine ergänzende Luftförderung in der Kraftstoffanlage der Motoren mit inneren Verbrennung zu kontrollieren, das mindestens einschließt: eine Einbruchsöffnung (7), die mit einem ersten Kanal verbunden ist (1), der genannte erste Kanal (1) verbindet eine erste Zone eines Einlaßkanals, die stromauf einer Drosselklappe gesetzt ist, mit der genannten Einbruchsöffnung (7); Ausgangslochen (10a und 10b) zu einem zweiten Kanal (2), der genannte zweite Kanal (2) verbindet die obererwähnten Ausgangslochen (10a und 10b) mit einer zweiten Zone des besagten Einlaßkanals, die stromauf der genannten Drosselklappe gesetzt ist; ein Ventilkörper (8), der die genannte Einbruchsöffnung (7) einschließt; ein Rohrrahmen (9) einteilig mit dem besagten Ventilkörper (8); der genannte Ventilkörper (8) schließt eine Magnetwicklung (15) ein, die elektrisch mit einer Steuerungsbüchse und einem magnetischen Kern (16) verbunden ist; ein beweglicher Schieber (19) zwischen einer ersten und einer zweiten Lage, der, beziehungsweise, durch ein erstes und ein zweites Gesperre bestimmt ist, um die genannten Ausgangslochen (10a und 10b) auch teilweise zu schließen oder zu öffnen; der obererwähnte Schieber (19) wird innen des besagten Rohrrahmens (9) gesetzt; ein Hohlraum (29) innen des Ventilkörpers (8) und die mit der genannten Einbruchsöffnung (7) durch Lochen (23a, 23c) verbunden wird; das dadurch gekennzeichnet ist, daß der genannte Schieber (19) einen Kegelstumpfshohlraum (24) mit einer scharfen Kante (25) zeigt; daß der genannte Schieber (19) wird durch einen beweglichen Anker (17) gebildet, der von einer Buchse (20) aus nichtmagnetischem Stoff umhüllt ist, und daß die obererwähnten Lochen (10a und 10b) in dem genannten Rohrrahmen (9) herausgearbeitet werden.

2. Ventil nach dem ersten Patentanspruch, daß dadurch gekennzeichnet ist, daß der genannte magnetische Kern (16) eine Spindel (26) abstützt, auf die der genannte Schieber (19) läuft und in der eine Kehle (27) gemacht ist, die geeignet ist, einen Sperring (26) zu lagern, und daß die genannte Wicklung (15) sich innen eines Kastens (31) findet, der einen Absatz (30) zeigt; der genannte Sperring (28) und der besagte Absatz (30) bilden, beziehungsweise, die obererwähnten erstes und zweites Gesperre.

**Revendications**

1. Vanne à commande électromagnétique, placée dans une conduite, servant à régler une débit d'air supplémentaire dans le système d'alimentation des moteurs à combustion interne, qui comprend, au moins,: une goulotte d'entrée (7) connectée avec une première canalisation (1), la susdite première canalisation (1) rélie une première partie d'une conduite d'aspiration qui se trouve en amont d'une vanne papillon avec la goulotte d'entrée (7) susdite; des trous de sortie (10a et 10b), portant sur une seconde canalisation (2); la seconde canalisation susdite (2), servant à rélier les susdits trous de sortie (10a et 10b) avec une seconde partie de la susdite conduite, qui se trouve en aval de la susdite vanne papillon; un corps de vanne (8) qui comprend la goulotte d'entrée (7) susdite; un élément tubulaire (9) qui est solidaire du susdit corps de la vanne (8), le susdit corps (8) de la vanne contient un bobinage magnétique (15) électriquement rélié avec une centrale de commande et un tore magnétique (16); un obturateur mobile (19) qui se trouve entre une première et une seconde position, qui sont, respectivement, définies par un premier et un seconde dispositif d'arrêt servant à fermer ou à ouvrir, même partiellement, les trous susdits (10a et 10b); l'obturateur susdit (19) étant situé à l'intérieur de l'élément tubulaire (9) susdit; une cavité (29) à l'intérieur du corps (8) et connectée à la susdite goulotte (7) par des trous (23a, 23c), caractérisé par le fait que le susdit obturateur (19) présente une cavité en tronc de cône (24) avec une arête vive (25); par le fait que l'obturateur susdit (19) est formé par une ancre mobile (17) revêtue par une douille (20) en matériel non-magnétique et par le fait que les trous susdits (10a et 10b) ont été percé sur le sudit élément tubulaire (9).

2. Vanne comme cité dans la révendication 1, caractérisée par le fait que le tore magnétique susdit (16) supporte une tige (26) sur laquelle le susdit obturateur (19) glisse, et dans laquelle il se trouve une gorge (27) servant à loger une bague d'arrêt (28), et par le fait que le susdit bobinage (15) se trouve à l'intérieur d'un conteneur (31) qui est doué d'un épaulement (30) constituant, respectivement, les susdits premier et seconde dispositif d'arrêt.

0 128 124

1